# FASCICULE DE BREVET EUROPEEN

(11) **EP 4 126 663 B1**
(45) Date de publication et mention de la délivrance du brevet: **08.10.2025**
(21) Numéro de dépôt: 21714177.9
(22) Date de dépôt: 25.03.2021
(51) Int. Cl.: B64C 25/36, B64C 25/32, B60B 3/08, B60B 25/00, B60B 27/00, B60K 7/00

(54) **ROUE D'AERONEF A PIONS D'ENTRAINEMENT**
FLUGZEUGRAD MIT ANTRIEBSLASCHEN
AIRCRAFT WHEEL HAVING DRIVING LUGS

(30) Priorité: 27.03.2020 FR 2003077
(43) Date de publication de la demande: 08.02.2023
(73) Titulaire: Safran Landing Systems, 78140 Vélizy-Villacoublay (FR)
(72) Inventeur: MOLINE, Sylvain, 77550 Moissy-Cramayel (FR); TARNOWSKI, Yannick, 77550 Moissy-Cramayel (FR); ROULON, Cédric, 77550 Moissy-Cramayel (FR)
(74) Mandataire: Cabinet Boettcher
(86) Numéro de dépôt international: PCT/EP2021/057844
(87) Numéro de publication internationale: WO 2021/191393

(56) Documents cités:
- EP-A1- 2 982 602
- EP-A1- 3 287 652
- FR-A1- 3 070 370
- US-A1- 2016 101 846

## Description

L'invention concerne le domaine des roues motorisée et notamment une roue d'atterrisseur d'aéronef destinée à être entraînée en rotation par un dispositif d'entraînement rapporté sur l'atterrisseur. L'invention concerne également un atterrisseur et un aéronef équipée d'une telle roue, et un procédé pour entraîner en rotation une roue d'aéronef.

### ARRIERE PLAN DE L'INVENTION

Dans le domaine de l'aviation, il est désormais prévu d'équiper les aéronefs d'un dispositif d'entraînement en rotation des roues pour permettre le déplacement au sol de l'aéronef sans utiliser son ou ses groupes motopropulseurs principaux.

Il s'agit souvent de mettre en rotation un organe d'entraînement et de transmettre le mouvement de rotation de l'organe d'entraînement à la roue via une interface de liaison.

Une roue d'aéronef comprend une jante solidaire d'un moyeu central définissant un axe de rotation de la roue. Pour entraîner la roue en rotation, il est connu du document FR-A-2996167 de munir la jante d'une pluralité de tocs s'étendant en saillie latérale (c'est-à-dire parallèlement à l'axe de rotation) d'un pourtour de ladite jante pour présenter deux faces parallèles. L'interface de liaison comprend alors des fourches aptes à chevaucher chacune un des tocs pour transmettre un couple de rotation par appui de la fourche sur l'une des faces du toc. Un tel procédé d'entraînement en rotation d'une roue d'aéronef a pour inconvénient de nécessiter un pourtour de jante particulier, et donc la fabrication de jantes spécifiques.

On connaît également des roues d'aéronefs comprenant deux demi-jantes assemblées au moyen de boulons répartis régulièrement autour de l'axe de rotation de la roue, le couple d'entraînement en rotation étant transféré à la roue via les boulons d'assemblage de la jante. Si un tel procédé d'entraînement en rotation de la roue ne nécessite pas de modifier les demi-jantes, il engendre des efforts importants au niveau des boulons pouvant remettre en cause le bon assemblage desdites demi-jantes. Le document EP2982602 A1 divulgue un procédé d'entraînement en rotation d'une roue d'aéronef, la roue étant équipée d'une jante comprenant deux demi-jantes assemblées par des boulons (5), dans lequel on commande un organe d'entraînement pour générer un couple d'entraînement de la roue, ce procédé comportant le transfert du couple d'entraînement à la roue via les boulons d'assemblage de la jante.

### OBJET DE L'INVENTION

L'invention a pour objet de proposer une roue pouvant être attelée facilement à un organe d'entraînement en rotation, et nécessitant peu de modification des jantes existantes.

### RESUME DE L'INVENTION

En vue de la réalisation de cet objet, l'invention propose une roue d'aéronef selon la revendication 1.

Ainsi, la roue peut être entraînée en rotation simplement par un organe d'entraînement qui tourne selon le même axe de rotation que la roue et qui est pourvu d'un orifice agencé pour recevoir une portion d'extrémité du pion d'entraînement.

Selon une caractéristique particulière, le pion d'entraînement est de forme globalement cylindrique et est emmanché en force dans un alésage du moyeu.

De manière particulière, le pion d'entraînement comprend un collet formant une butée à l'emmanchement dudit pion d'entraînement dans l'alésage.

De manière particulière, l'alésage comporte un lamage à l'intérieur duquel est logé le collet.

De manière particulière, l'alésage comprend un fond de forme arrondie.

Selon une autre caractéristique particulière, la roue comprend une pluralité de pions d'entraînement symétriquement répartis autour de l'axe de rotation de la roue.

L'invention concerne également un atterrisseur pour aéronef comprenant une telle roue et un dispositif d'entraînement en rotation de la roue comportant un organe d'entraînement agencé pour coopérer avec le pion d'entraînement et transférer un couple d'entraînement à la roue via ledit pion d'entraînement.

Selon une caractéristique particulière, l'organe d'entraînement comprend un orifice agencé pour recevoir une portion d'extrémité du pion d'entraînement.

De manière particulière, l'organe d'entraînement est vissé sur le moyeu.

L'invention concerne aussi un aéronef comportant une structure porteuse sur laquelle est fixé un tel atterrisseur.

L'invention concerne en outre un procédé d'entraînement en rotation d'une telle roue d'aéronef dans lequel un couple d'entraînement en rotation de la roue est généré par un organe d'entraînement et est transféré à la roue via le pion d'entraînement.

### BREVE DESCRIPTION DES DESSINS

L'invention sera mieux comprise à la lumière de la description qui suit, laquelle est purement illustrative et non limitative, et doit être lue en regard des dessins annexés, parmi lesquels :
- la figure 1 est une vue en coupe axiale d'une roue d'aéronef selon un mode de réalisation particulier de l'invention ;
- la figure 2 est une vue de face d'une partie centrale de la roue d'aéronef illustrée à la figure 1, montrant la répartition des pions d'entraînement autour de l'axe de rotation de la roue ;
- la figure 3 est une vue de détail de la zone III de la roue d'aéronef illustrée à la figure 1 ;
- la figure 4 est une vue partielle, en coupe axiale selon un plan IV-IV, de la roue d'aéronef illustrée à la figure 2.

### DESCRIPTION DETAILLEE DE L'INVENTION

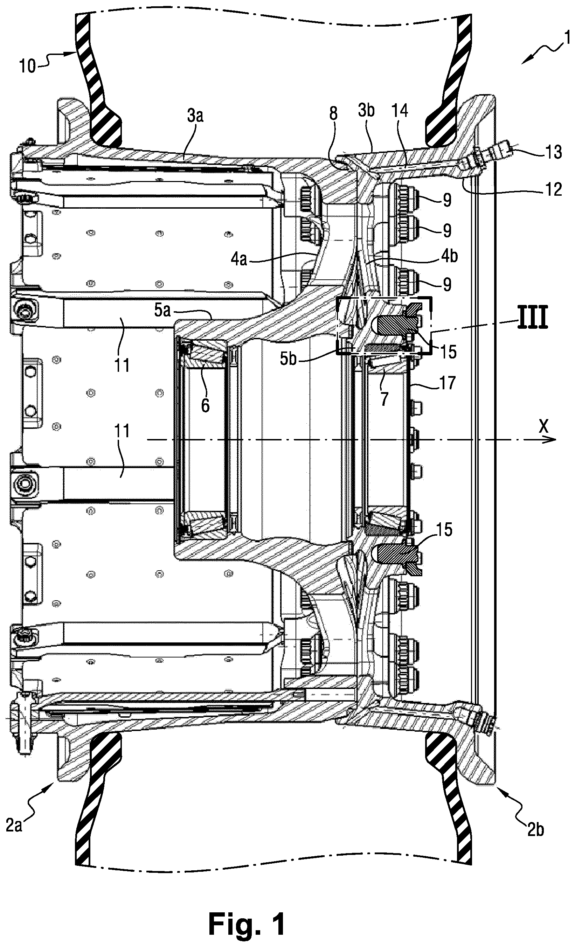

En référence à la figure 1, une roue 1 d'aéronef comprend, selon un mode de réalisation particulier de l'invention, deux demi-roues 2a, 2b en aluminium qui comportent chacune une demi-jante 3a, 3b de forme annulaire, un demi-moyeu 5a, 5b qui définit un axe X de rotation de la roue et un voile 4a, 4b qui solidarise la demi-jante 3a, 3b et le demi-moyeu 5a, 5b coaxialement l'un avec l'autre. La demi-roue 2a comporte un logement ménagé dans le voile 4a et dans lequel est agencé un joint d'étanchéité 8.

Les demi-roues 2a, 2b sont rapprochées suivant une direction parallèle à l'axe X et comportent des portées de centrage pour assurer le bon positionnement relatif des demi-roues 2a, 2b. Les demi-roues 2a, 2b sont maintenues en position par des boulons 9 d'assemblage agencés dans des orifices percés en regard dans les voiles 4a, 4b.

De façon connue en soi, les boulons 9 sont vissés et serrés pour assembler les demi-roues 2a, 2b après montage d'un pneumatique 10 sur les demi-jantes 3a, 3b. Dans cette position, le joint d'étanchéité 8 est écrasé entre les demi-roues 2a, 2b et empêche ainsi le gaz contenu dans un volume délimité par le pneumatique 10 et les demi-jantes 3a, 3b de s'échapper vers l'extérieur de la roue 1.

Chacune des demi-jantes 3a, 3b a un bord annulaire libre pourvu d'un rebord de jante, annulaire, s'étendant en saillie radiale vers l'extérieur de la roue 1. Les rebords de jante forment, de façon connue en soi, des butées latérales empêchant le pneumatique 10 de déjanter.

Une surface intérieure de la demi-jante 3a s'étend en regard d'une surface extérieure du demi-moyeu 5a et délimite avec cette dernière et le voile 4a un espace de réception d'un empilement de disques d'un frein (non représenté ici). L'empilement comprend des disques stators fixes en rotation par rapport à l'essieu et des disques rotors comportant des encoches périphériques recevant des barrettes, généralement désignées en 11, fixées sur la surface intérieure de la demi-jante 3a. Chaque barrette 11 s'étend sensiblement selon un axe parallèle à l'axe X de rotation de la roue 1.

La demi-jante 3b possède une surface intérieure en regard d'une surface extérieure du demi-moyeu 3b. Un premier bossage 12 de forme sensiblement rectiligne s'étend en saillie de ladite surface intérieure du voile 4b vers le bord libre de la demi-jante 3b parallèlement à l'axe X de sorte que, lorsqu'on regarde la roue 1 suivant l'axe X, le bossage 12 définit une surface d'accueil prolongeant localement le rebord de jante et comportant un alésage dans lequel est fixée une valve 13 de gonflage. L'alésage recevant la valve 13 est prolongé par un conduit 14 permettant d'introduire du gaz sous pression dans le volume délimité par le pneumatique 10 et les demi-jantes 3a, 3b.

Les demi-moyeu 5a, 5b forme un moyeu reçu à pivotement sur un essieu au moyen d'un roulement 6, 7.

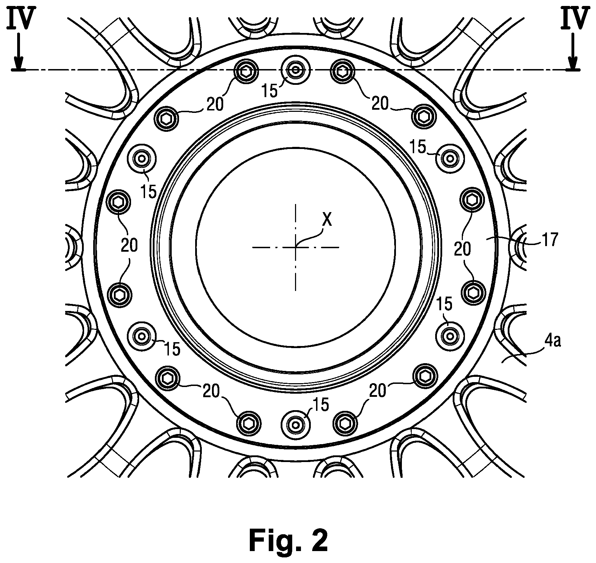

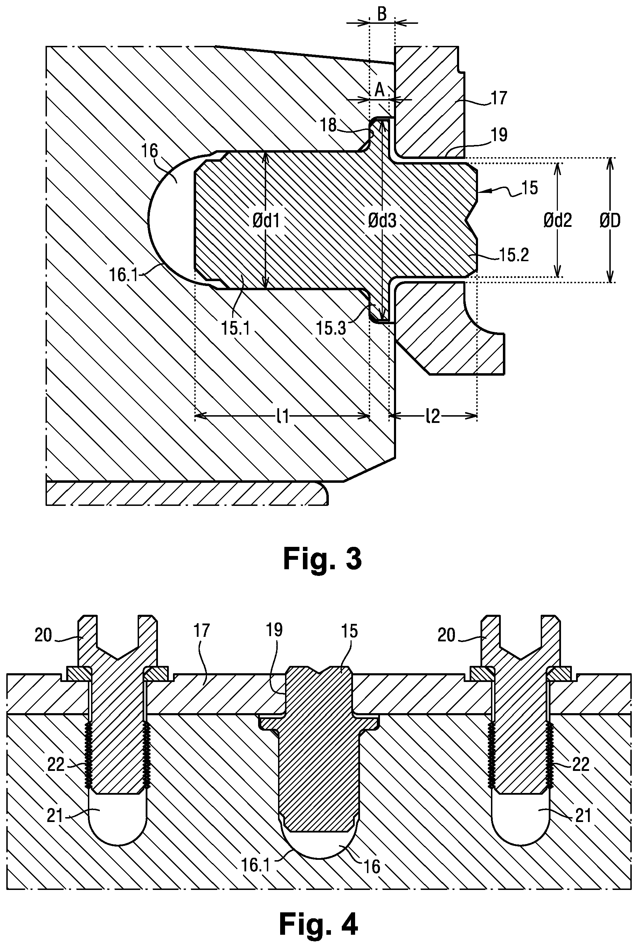

En référence aux figures 2 et 3, la roue 1 comporte six pions 15 d'entraînement, de forme globalement cylindrique, qui s'étendent en saillie latérale du demi-moyeu 5b selon une direction sensiblement parallèle à l'axe X de rotation de la roue 1. Les pions 15 sont symétriquement répartis autour de l'axe X et sont chacun emmanchés en force dans un alésage 16 du demi-moyeu 5b.

Les pions 15 sont réalisés d'un seul tenant en un alliage de Nickel et de chrome comme celui produit sous la marque Inconel^{®} par la société Special Metals Corporation. Chaque pion 15 comprend une première portion 15.1 cylindrique et une deuxième portion 15.2 cylindriques entre lesquelles est prévu un collet 15.3.

La première portion 15.1 et la deuxième portion 15.2 constituent respectivement une zone d'emmanchement du pion 15 dans l'alésage 16 et une zone d'accouplement du pion 15 avec un premier crabot 17. La première portion 15.1 a un diamètre d1 légèrement supérieur à celui de l'alésage 16 et a une extrémité libre de plus faible diamètre pour faciliter le centrage du pion 15 dans ledit alésage 16. La deuxième portion 15.2 a un diamètre d2 inférieur au diamètre d1 de la première portion 15.1 et présente, selon l'axe X, une longueur l1 sensiblement deux fois plus importante qu'une longueur l2 de la première portion 15.1 selon le même axe.

Le collet 15.3 forme une butée à l'emmanchement du pion 15 dans l'alésage 16 et prend appui contre un lamage 18 réalisé à l'entrée dudit alésage 16. Le collet 15.3 a un diamètre d3 légèrement inférieur au diamètre du lamage 18 et présente, selon l'axe X, une épaisseur A légèrement inférieure à la profondeur B du lamage 18 selon le même axe, de sorte que le collet 15.3 est logé à l'intérieur de l'évidemment défini par le lamage 18.

Les alésages 16 s'étendent parallèlement à l'axe X depuis une surface latérale du demi-moyeu 5b vers l'intérieur de la roue 1, et comportent un fond 16.1 de forme arrondie de façon à réduire la concentration de contrainte au niveau desdits alésages 16 et ainsi limiter les départs de crique.

Le premier crabot 17 comprend une platine circulaire plaquée contre le demi-moyeu 5b et bordée par des saillies axiales formant des griffes de crabotage. La platine du premier crabot 17 comporte six orifices 19 traversants, de forme cylindrique, agencés pour recevoir sensiblement à ajustement les portions 15.2 des pions 15 et ainsi transmettre à la roue 1 un couple d'entraînement engendré par un moteur électrique non représenté entrainant en rotation autour de l'axe X un deuxième crabot qui est monté pour être mobile entre une première position en interaction avec le premier crabot 17 et une deuxième position dégagée du premier crabot 17. Les orifices 19 ont un diamètre D légèrement supérieur au diamètre d2 des deuxièmes portions 15.2 du pion 15 et inférieur au diamètre d3 du collet 15.3. En position de service, la platine crabot 17 prend appui contre le demi-moyeu 5b de sorte que les collets 15.3 se retrouvent emprisonnés dans les lamages 18 et limitent ainsi le risque de désinsertion des pions 15 hors des alésages 16.

Comme illustré aux figures 2 et 4, le premier crabot 17 est maintenu en position de service par douze vis 20 entourant deux à deux les pions 15. Les vis 20 sont vissées dans des trous 21 taraudés prévus à cet effet dans le demi-moyeu 5b. Les centres des vis 20 s'inscrivent sur un même cercle dont le centre est situé sur l'axe X, et sont alignés deux à deux avec les centres des pions 15. Les vis 20 traversent la platine du premier crabot 17 via des perçages ménagés dans ladite platine en correspondance des trous 21. Afin de limiter le risque d'arrachement des filets des trous 21 taraudés, des filets rapportés 22 sont installés dans lesdits trous 21, ce qui permet d'augmenter les efforts de serrage induits par les vis 20. On notera que le jeu entre les vis 20 et les trous ménagés dans la platine pour les recevoir est supérieur au jeu entre les pions 15 et les trous ménagés dans la platine pour les recevoir de telle manière que le couple est transmis par les pions 15 et non par les vis 20.

Bien entendu, l'invention n'est pas limitée aux modes de réalisation décrits mais englobe toute variante entrant dans le champ de l'invention telle que définie par les revendications.

Le nombre et la disposition des pions d'entraînement peuvent être différents du mode de réalisation décrit.

Bien que les pions d'entraînement ont ici une section transversale de forme cylindrique, d'autres forment peuvent être envisagés.

Bien qu'ici les pions d'entraînement soient emmanchés en force dans le moyeu, d'autre modes de fixations de ces pions peuvent être envisagés (vissage, boulonnage, collage, soudage...).

La forme et les dimensions du premier crabot peuvent être différentes.

Bien qu'ici la roue soit en aluminium et les pions en alliage de nickel et de chrome, d'autres matériaux peuvent être utilisés.

D'autres moyens de fixation du premier crabot sur la demi-jante peuvent être envisagés (engagement élastique de type clipsage, boulonnage...).

La roue de l'invention est ici décrite en application à un train d'atterrissage d'aéronef. Elle est bien entendu utilisable pour d'autres types de véhicules et par exemple des véhicules terrestres.

Bien qu'ici le fond des alésages soit de forme arrondie, d'autres formes peuvent être envisagées (tubulaire, tronconique...).

## Revendications

1. Roue d'aéronef (1) comprenant deux demi-roues (2a, 2b) assemblées entre elles par des boulons (9), chacune des demi-roues comportant une demi-jante (3a, 3b), un demi-moyeu (5a, 5b) définissant un axe (X) de rotation de la roue, et un demi-voile (4a, 4b) solidarisant la demi-jante et le demi-moyeu coaxialement l'un avec l'autre, et les boulons étant agencés dans des orifices percés en regard dans les demi-voiles, dans laquelle les demi-moyeu (5a, 5b) forment un moyeu, la roue comportant en outre au moins un pion d'entraînement (15) s'étendant depuis le moyeu en saillie selon une direction sensiblement parallèle à l'axe de rotation de la roue pour coopérer avec un organe d'entraînement (17) en rotation de la roue, le pion d'entraînement étant distinct des boulons (9).

2. Roue d'aéronef (1) selon la revendication 1, dans laquelle le pion d'entraînement (15) est de forme globalement cylindrique et est emmanché en force dans un alésage (16) du moyeu (5a, 5b).

3. Roue d'aéronef (1) selon la revendication 2, dans laquelle le pion d'entraînement (15) comprend un collet (15.3) formant une butée à l'emmanchement dudit pion d'entraînement dans l'alésage (16).

4. Roue d'aéronef (1) selon la revendication 3, dans laquelle l'alésage comporte un lamage (18) à l'intérieur duquel est logé le collet (15.3).

5. Roue d'aéronef (1) selon l'une quelconque des revendications 2 à 4, dans laquelle l'alésage (16) comprend un fond (16.1) de forme arrondie.

6. Roue d'aéronef (1) selon l'une quelconque des revendications précédentes, comprenant une pluralité de pions d'entraînement (15) symétriquement répartis autour de l'axe (X) de rotation de la roue.

7. Atterrisseur pour aéronef, comprenant au moins une roue selon l'une quelconque des revendications précédentes et un dispositif d'entraînement en rotation de la roue comportant un organe d'entraînement agencé pour coopérer avec le pion d'entraînement et transférer un couple d'entraînement à la roue via ledit pion d'entraînement.

8. Atterrisseur selon la revendication 7, dans lequel l'organe d'entraînement (17) comprend un orifice (19) agencé pour recevoir une portion d'extrémité (15.2) du pion d'entraînement (15).

9. Aéronef comportant une structure porteuse sur laquelle est fixé au moins un atterrisseur selon la revendication 7 ou 8.

10. Procédé d'entraînement en rotation d'une roue d'aéronef (1) selon l'une quelconque des revendications 1 à 6, dans lequel un couple d'entraînement en rotation de la roue est généré par un organe d'entraînement (17) et est transféré à la roue via le pion d'entraînement (15).

## Patentansprüche

1. Luftfahrzeugrad (1), umfassend zwei durch Bolzen (9) miteinander verbundene Radhälften (2a, 2b), wobei jede der Radhälften eine Halbfelge (3a, 3b), eine Halbnabe (5a, 5b), die eine Drehachse (X) des Rades definiert, und eine Halbschale (4a, 4b), welche die Halbfelge und die Halbnabe koaxial fest miteinander verbindet, enthält, und wobei die Bolzen in Öffnungen angeordnet sind, die einander gegenüberliegend in den Halbschalen ausgebildet sind, wobei die Halbnaben (5a, 5b) eine Nabe bilden, wobei das Rad ferner zumindest eine Antriebslasche (15) enthält, die sich derart von der Nabe weg vorstehend in einer Richtung im Wesentlichen parallel zu der Rad-Drehachse erstreckt, dass sie mit einem Antriebsorgan (17) zum Drehantrieb des Rades zusammenwirkt, wobei sich die Antriebslasche von den Bolzen (9) unterscheidet.

2. Luftfahrzeugrad (1) nach Anspruch 1, wobei die Antriebslasche (15) eine insgesamt zylindrische Form aufweist und mit Kraft in eine Bohrung (16) der Nabe (5a, 5b) eingepresst ist.

3. Luftfahrzeugrad (1) nach Anspruch 2, wobei die Antriebslasche (15) einen Kragen (15.3) umfasst, der einen Anschlag für das Einpressen der Antriebslasche in die Bohrung (16) bildet.

4. Luftfahrzeugrad (1) nach Anspruch 3, wobei die Bohrung eine Senkung (18) umfasst, in welcher der Kragen (15.3) eingebettet ist.

5. Luftfahrzeugrad (1) nach einem der Ansprüche 2 bis 4, wobei die Bohrung (16) einen abgerundet ausgebildeten Boden (16.1) umfasst.

6. Luftfahrzeugrad (1) nach einem der vorhergehenden Ansprüche, umfassend eine Mehrzahl von Antriebslaschen (15), die symmetrisch um die Drehachse (X) des Rades herum verteilt sind.

7. Luftfahrzeugfahrwerk, umfassend zumindest ein Rad nach einem der vorhergehenden Ansprüche sowie eine Antriebsvorrichtung zum Drehantrieb des Rades, welche ein Antriebsorgan enthält, das dafür ausgelegt ist, mit der Antriebslasche zusammenzuwirken und über die Antriebslasche ein Antriebsdrehmoment auf das Rad zu übertragen.

8. Fahrwerk nach Anspruch 7, wobei das Antriebsorgan (17) eine Öffnung (19) umfasst, die dafür ausgelegt ist, einen Endabschnitt (15.2) der Antriebslasche (15) aufzunehmen.

9. Luftfahrzeug, umfassend eine Tragstruktur, an welcher zumindest ein Fahrwerk nach Anspruch 7 oder 8 befestigt ist.

10. Verfahren zum Drehantrieb eines Luftfahrzeugrades (1) nach einem der Ansprüche 1 bis 6, bei welchem ein Rad-Antriebsdrehmoment von einem Antriebsorgan (17) erzeugt wird und über die Antriebslasche (15) auf das Rad übertragen wird.

## Claims

1. An aircraft wheel (1) comprising two half-wheels (2a, 2b) held in position by assembly bolts (9), each of the half-wheels comprising a half-rim (3a, 3b), a half-hub (5a, 5b) defining an axis (X) of rotation of the wheel, and a half-web (4a, 4b) securing the half-rim and the half-hub coaxially with each other, and the bolts being arranged in facing orifices formed in the half-webs, wherein the half-hubs (5a, 5b) form a hub, the wheel further including at least one driving pin (15) that extends from the hub, projecting in a direction substantially parallel to the axis of rotation of the wheel so as to cooperate with a driving member (17) for driving the wheel in rotation, the driving pin being distinct from bolts (9).

2. The aircraft wheel (1) according to claim 1, wherein the driving pin (15) is of a generally cylindrical shape and is force-fitted into a bore (16) in the hub (5a, 5b).

3. The aircraft wheel (1) according to claim 2, wherein the driving pin (15) comprises a collar (15.3) forming an abutment against the fitting of said driving pin into the bore (16).

4. The aircraft wheel (1) according to claim 3, wherein the bore includes a counterbore (18) inside which the collar (15.3) is housed.

5. The aircraft wheel (1) according to any one of claims 2 to 4, wherein the bore (16) comprises a bottom (16.1) of a rounded shape.

6. The aircraft wheel (1) according to any one of the preceding claims, comprising a plurality of driving pins (15) symmetrically distributed about the axis (X) of rotation of the wheel.

7. An aircraft landing gear comprising at least one wheel according to any one of the preceding claims and a device for driving the wheel in rotation including a driving member arranged to cooperate with the driving pin and to transfer a driving torque to the wheel via said driving pin.

8. The aircraft landing gear according to claim 7, wherein the driving member (17) comprises an orifice (19) arranged to receive an end portion (15.2) of the driving pin (15).

9. An aircraft comprising a support structure on which is fixed at least one landing gear according to claim 7 or 8.

10. A method for driving in rotation an aircraft wheel (1) according to any one of claims 1 to 6, wherein a rotational driving torque of the wheel is generated by a driving member (17) and is transferred to the wheel via the driving pin (15).
